Europäisches Patentamt

European Patent Office

Office européen des brevets

(11) Publication number: **0 096 673**
**A2**

(12) **EUROPEAN PATENT APPLICATION**

(21) Application number: **83850153.4**

(22) Date of filing: **03.06.83**

(51) Int. Cl.³: **B 65 G 33/24**

(30) Priority: **07.06.82 SE 8203496**

(43) Date of publication of application:
**21.12.83 Bulletin 83/51**

(84) Designated Contracting States:
**BE DE FR GB IT NL**

(71) Applicant: **AB Nordströms Linbanor**
**Box 914**
**S-199 25 Enköping(SE)**

(72) Inventor: **Svens, Runar**
**Fabriksgatan 13**
**S-199 32 Enköping(SE)**

(54) Device for the transfer of material between a substantially horizontal and a substantially vertical screw conveyor.

(57) Device for the transfer of material between a substantially horizontal (13) and a substantially vertical screw conveyor (1) which are located in the same vertical plane, in which the upper end of the screw (10) in the vertical conveyor is located in the substantially same horizontal plane as the centre axis of the horizontal conveyor and in which the casing of the vertical conveyor at the upper end of the screw is designed in such a way that the material at the upper end is subject to a radial force directed towards the horizontal conveyor and in which the vertical conveyor is turnable in relation to the horizontal conveyor around a horizontal axis perpendicular to said horizontal plane.

EP 0 096 673 A2

Croydon Printing Company Ltd

./...

*Fig. 1*

Device for the transfer of material between a substantially horizontal and a substantially vertical screw conveyor.

The present invention refers to a device for the transfer of material between a substantially horizontal and a substantially vertical screw conveyor which are located in the same vertical plane.

When discharging bulk, as for sample concrete or coal, from ships screw conveyors are often used. Such screw conveyor devices generally consist of a vertical screw conveyor, which at its lower end is provided with some type of feeding device for conveying the bulk material up from the hold of the ship, whereupon this vertical screw conveyor supplies the material to the horizontal conveyor via a transition house. The two conveyors are generally jointly connected to each other and revolving in a common vertical plane. The transfer itself is generally carried out in such a way that the vertical conveyor is brought up at a level considerably above the horizontal conveyor, the material then sliding down towards this horizontal conveyor. This means that the transition house has had to be made relatively large, so that the vertical conveyor supplies the material at a relatively high level and this means especially for slow moving bulk material great difficulties in having a secure material transfer and furthermore, the conveying of the material above the level of the horizontal conveyor means an essential extra consumption of energy. Obviously, such a device cannot be used reversibly, i.e. for transfer of material to the ship. A device for reducing the above mentioned disadvantages, especially the disadvantage of conveying the material considerably above the level of the horizontal conveyor is shown in the Swedish Patent Application No. 7510926-4, in which the horizontal and the vertical conveyor are located in different vertical planes. Such a device has, however, the disadvantage of being mechanically unsymmetrical which is disadvantageous with regard to the construction and furthermore, a series of perpendicular changes of direction of the material is achieved which is disadvantageous.

The object of the present invention is therefore to provide a device for transfer of material between a vertical and a horizontal screw conveyor in which the above mentioned disadvantages have been eliminated. The characteristics of the invention will appear from the patent claim attached to the specification.

The invention will now be explained in detail, reference being made to the enclosed drawing in which:
Fig. 1 schematically shows a sideview, partly in section, of a device according to the invention; and
Fig. 2 shows the device according to Fig. 1 seen from above.

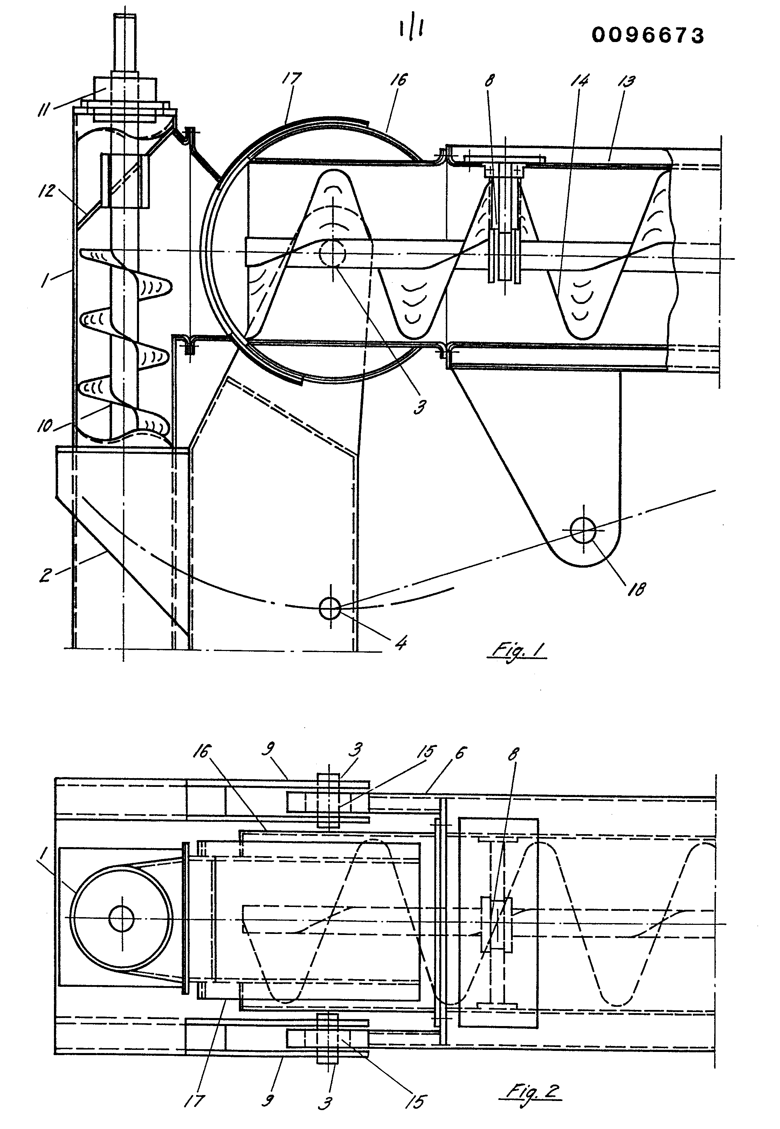

In the drawing, reference 1 denotes the screw tube of a vertical tube conveyor which is supported by a supporting steel construction 2. This is finished at the top with forks 9 containing brackets 3 for swinging axes and supporting axes. In the steel construction there are also brackets 4 which are connected to brackets 18 via a cylinder not shown in the figure, so that the vertical conveyor can be turned around the horizontal axis 3. Reference 13 denotes the casing of a horizontal conveyor, which can constitute a boom of a crane, the boom being designed as a self supporting tube girder. The boom is finished off with consoles 6 provided with bearings for the axes 15. Reference 14 denotes the screw itself in the horizontal conveyor and reference 8 denotes the utmost support bearing of the screw. In the vertical conveyor reference 10 denotes the screw itself and reference 11 denotes the uppermost support bearing. The interior of the two conveyors are connected to each other via a transition house consisting of two concentric cylinder surfaces 16, 17 with opposite openings which is evident from the figure. According to the invention the screw 10 is finished on the same level as the main axis of the screw 14 and the 0096673
interior of the vertical conveyor with a tilted plate 12 .
which brings about that the screw 10 presses out the material
horizontally towards the horizontal conveyor. It is also
possible to replace the plate 12 by other counter pressure -
arrangements, for example a screw.

By means of the device according to the invention with the
two conveyors located in the same vertical plane a material flow
is obtained where the material does not have to be conveyed -
up to a level above the horizontal conveyor which is essential
from the saving of energy point of view. Furthermore, a small
and symmetric transition house is obtained and the device
also permits the material to be supplied in both directions.

We claim:

Device for the transfer of material between a substantially horizontal (13) and a substantially vertical screw conveyor (1) which are located in the same vertical plane, characterized in that the upper end of the screw (10) in the vertical conveyor is located in the substantially same horizontal plane as the centre axis of the horizontal conveyor and that the casing of the vertical conveyor at the upper end of the screw is designed in such a way that the material at the upper end is subject to a radial force directed towards the horizontal conveyor and that the vertical conveyor is turnable in relation to the horizontal conveyor around a horizontal axis perpendicular to said horizontal plane.

0096673

Fig. 1

Fig. 2